# EUROPÄISCHE PATENTSCHRIFT

(11) **EP 1 618 360 B1**
(45) Veröffentlichungstag und Bekanntmachung des Hinweises auf die Patenterteilung: **03.09.2008**
(21) Anmeldenummer: 04727892.4
(22) Anmeldetag: 16.04.2004
(51) Int. Cl.: G01K 17/00, G01T 1/12, G01J 1/02

(54) **KRYO-DETEKTORVORRICHTUNG**
CRYOGENIC DETECTOR DEVICE
DISPOSITIF DE DETECTION CRYOGENIQUE

(30) Priorität: 17.04.2003 DE 10317888
(43) Veröffentlichungstag der Anmeldung: 25.01.2006
(73) Patentinhaber: Höhne, Jens, 80331 München (DE)
(72) Erfinder: Höhne, Jens, 80331 München (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/EP2004/004080
(87) Internationale Veröffentlichungsnummer: WO 2004/092770

(56) Entgegenhaltungen:
- WO-A-03/003050
- US-B1- 6 230 499
- F. GATTI, P. MEUNIER: "A 3.9 K transition edge particle detector with DC-SQUID read-out and temperature stabilization" INFN-TC, ISTUTUTO NAZIONALE DI FISICA NUCLEARE, SEZIONE DI GENOVA, 25. Januar 1996 (1996-01-25), Seiten 1-7, XP002310221 SIS-PUBBLICAZIONI, FRASCATI, ITALY
- D. A. WOLLMAN, HILTON, IRWIN, BERGREN, RUDMAN, NEWBURY, MARTINIS: "cryogenic microcalorimeters for x-ray microanalysis" NCSL WORKSHOP AND SYMPOSIUM, 1999, Seiten 811-819, XP002310222

## Beschreibung

### Technisches Gebiet

Die Erfindung betrifft eine Kryo-Detektorvorrichtung gemäß Anspruch 1.

Derartige Detektorvorrichtungen mit einem auf einem Tieftemperatureffekt basierenden Sensor, der in einer ersten Kühlstufe mittels eines mechanischen Kühlers gekühlt wird, haben einen großen Einsatzbereich in analytischen Anwendungen, bei der Teilchen, Strahlung oder Felder mit hoher Energieauflösung und/oder hoher Zeitauflösung an beliebigen Orten untersucht werden sollen.

### Stand der Technik

Zum Kühlen von Sensoren, die auf einem Tieftemperatureffekt basieren (Kryosensoren oder Kryodetektoren), werden im Stand der Technik Kryostaten verwendet, die eine erste Kühleinrichtung und eine zweite Kühleinrichtung, die von der ersten Kühleinrichtung vorgekühlt wird, aufweisen, wobei der Sensor an die zweite Kühleinrichtung thermisch gekoppelt ist. Zur Erzeugung einer Temperatur von ungefähr 4K besteht die erste Kühleinrichtung dabei meist aus einem gekoppelten Stickstoff/Helium-Kühler. Dieser ist verfahrens- und vorrichtungstechnisch sehr aufwendig und braucht viel Platz. Des weiteren ist das benötigte flüssige Kühlmittel (Stickstoff, Helium) zum einen teuer und zum anderen nicht überall verfügbar. Aus diesem Grund ist es der Einsatz von Sensoren, die auf einem Tieftemperatureffekt basieren, für industrielle Zwecke relativ unrentabel und deshalb ungeeignet.

Aus Info-Phys-Tech Nr.6, 1996, aus VDI Technologiezentrum, Physikalische Technologien, ist eine Kältemaschine in Form eines Pulsröhrenkühlers bekannt, wobei der Pulsröhrenkühler aufweist: ein Pulsrohr, an dessen einem Ende ein kalter Wärmetauscher, an dem Wärme von außen aufgenommen wird, vorgesehen ist, und an dessen anderem Ende ein warmer Wärmetauscher, an dem Wärme nach außen abgegeben wird, vorgesehen ist, einen Regenerator, der als Wärmezwischenspeicher dient, und einen Druck-oszillator, der dazu dient, periodische Druckänderungen zu erzeugen, wobei das Pulsrohr an dem Ende, an dem der kalte Wärmetauscher vorgesehen ist, über jeweilige Leitungen über den Regenerator mit dem Druckoszillator verbunden ist, so daß eine periodische Verschiebung eines Arbeitsgases zwischen dem Pulsrohr und dem Druckoszillator ermöglicht wird.

Aus der EP 1014056 A2 bzw. US-B-6 230 499 ist eine Kryo-Detektorvor-richtung mit einer ersten Kühleinrichtung in Form eines zweistufigen Pulsröhrenkühlers und einer zweiten Kühleinrichtung z.B. in Form einer Entmagnetisierungsstufe bekannt. Es ist auch bekannt, für diese zweite Kühleinrichtung einen 3He/4He-Entmischungskühler oder einen 3He-Kühler zu verwenden. Durch den Pulsröhrenkühler erfolgt eine Vorkühlung auf ca. 4 K und durch die zweite Kühleinrichtung erfolgt eine Kühlung auf die Betriebs-temperatur der auf einem Tieftemperatureffekt basierenden Sensoren im Bereich von 50 - 400 mK.

Durch die zwei Kühlstufen und die extrem niedrigen Betriebstemperaturen der Sensoren ist der aparative Aufwand und damit der Preis derartiger Kryo-Detektorvorrichtungen enorm. Aufgrund der tiefen Betriebstemperaturen sind mehrere Infrarotfilter notwendig und im Bereich des Meßrüssels viele Schilde, die wiederum einen großen Durchmesser des Meßrüssels bedingen.

Aus F. GATTI, P. MEUNIER: "A 3.9 K transition edge particle detector with DC-SQUID read-out and temperature stabilization" INFN-TC, ISTUTUTO NAZIONALE DI FISICA NUCLEARE, SEZIONE DI GENOVA, 25. Januar 1996 (19996-01-25), Seiten 1-7, SIS-PUBBLICZIONI, FRASCATI, ITALY ist eine Sensorvorrichtung zum Erfassen von Teilchen mit einem auf einem Tieftemperatureffekt basierenden Sensor bekannt, der eine Sensorfläche von 1 mm² aufweist. Die Sensorvorrichtung wird mittels einer mechanischen Kühlvorrichtung auf eine Betriebstemperatur von 3,9K gekühlt. Die Sensorsignale werden mittels SQUID verstärkt.

Aus D. A. WOLLMAN, HILTON, IRWIN, BERGREN, RUDMAN, NEWBURY, MARTINIS: "cryogenic microcalorimeters for x-ray microanalysis" NCSL WORKSHOP AND SYMPOSIUM, 1999, Seiten 811-819, ist ein Sensorflächenvergrößerungsmittel in Form von RöntgenLinsen bekannt. Aus US-B-6 230 499 ist eine Sensorflächenvergrößerungsmittel in Form von mehreren Sensorelementen bekannt.

### Kurzfassung der Erfindung

Es ist Aufgabe der vorliegenden Erfindung, eine Kryo-Detektorvorrichtung anzugeben, die einen einfachen Aufbau aufweist und damit preisgünstig ist.

Die Lösung dieser Aufgabe erfolgt durch die Merkmale des Anspruchs 1.

Durch die auf einem Tieftemperatureffekt basierenden Sensoren wird die durch den Energieeintrag, beispielsweise eines Röntenquants, erzeugte Temperaturerhöhung gemessen. Je kleiner die Wärmekapazität des Sensors ist, desto größer ist die aus dem Energieeintrag resultierende Temperaturerhöhung und folglich desto größer ist die Energieauflösung des Sensors. Da die Wärmekapazität nicht konstant, sondern temperaturabhängig ist, werden solche Sensoren üblicherweise im Bereich zwischen 50 und 400 mK, d. h. im Bereich kleinerer Wärmekapazitäten betrieben. Die nominale Sensorfläche eines einzelnen Sensors ist kleiner als 50.000 µm². Dies führt im Vergleich zu Sensorflächen von ca. 80.000 µm² gemäß dem Stand der Technik zu einer entsprechenden Verringerung der Wärmekapazität der Sensoren, die wiederum die Erhöhung der Betriebstemperatur auf den gewünschten Bereich ermöglichen.

Entgegen ursprünglicher Annahmen hat sich herausgestellt, daß auch bei höheren Betriebstemperaturen der Sensoren im Bereich zwischen 2,4 und 4,2 K noch "vernünftige" Meßergebnisse zu erzielen sind, vorausgesetzt, das Bauvolumen der einzelnen Sensoren wird klein genug gewählt und die effektive Sensorfläche wird zusätzlich vergrößert. Bevorzugt ist hierbei ein Betriebstemperaturbereich zwischen 2,5 und 3,5 K und insbesondere zwischen 2,6 und 2,9 K.

Durch die damit mögliche höhere Betriebstemperatur der Sensoren sind weniger absorbierende Infrarotfilter im Eintrittsfenster notwendig. Hierdurch steigt insbesondere bei niedrigen Energien der zu erfassenden Strahlung die Effizienz extrem an, da die Absorbtion der zu erfassenden Strahlung exponentiell mit der Dicke der Filter skaliert. Weiterhin wird der erfindungsgemäße Kryodetektor im Bereich des Rüssels, welcher z.B. in ein Elektronenmikroskop eingeführt wird, kompakter im Durchmesser. Hierdurch läßt sich der Kryodetektor näher an die Probe heranführen, was wiederum zu einer Effizienzsteigerung führt.

Typischerweis besteht die Sensoreinrichtung aus einem Absorber, welcher Teilchen und/oder Strahlung absorbiert und thermalisiert und dem eigentlichen Sensor, z. B. einem Phasenübergangsthermometer. Der eigentliche Sensor, z. B. das Phasenübergangsthermometer ist unter und/oder neben dem Absorber angeordnet.

Durch die höheren Betriebstemperaturen ist es möglich, die Kühlung mit einer einzigen ein- oder mehrstufigen mechanischen Kühleinrichtung zu erzeugen (Anspruch 2). Durch das Fehlen der zweiten Kühlstufe, die vorgekühlt werden muß, kann die Kühlleistung des mechanischen Kühlers etwa um einen Faktor 5 herabgesetzt werden. Dies führt zu einer kompakteren Bauweise und einem günstigeren Preis.

Gemäß einer vorteilhaften Ausgestaltung der Erfindung nach Anspruch 3 wird als Sensorflächenvergrößerungsmittel eine Röntgenlinse eingesetzt. Dies stellt eine einfache und kostengünstige Möglichkeit der notwendigen Vergrößerung der aktiven Sensorfläche dar.

Alternativ kann die effektive Sensorfläche auch durch ein Sensorarray aus einer Mehrzahl von Einzelsensoren realisiert sein (Anspruch 2).

Für die mechanische Kühleinrichtung eignet sich insbesondere ein ein- oder mehrstufiger Pulsröhrenkühler oder Gifford-McMahon-Kühler (Anspruch 5 und 6).

Als Sensoren lassen sich supraleitende Tunneldioden, magnetische Kalorimeter, Widerstandsthermometer und/oder insbesondere Phasenübergangsthermometer einsetzen. Phasenübergangsthermometer sind bevorzugt, da die Messung des Energieeintrags durch Erhöhung der Temperatur direkt nachgewiesen werden kann (Anspruch 7).

Gemäß einer vorteilhaften Ausgestaltung der Erfindung nach Anspruch 8 wird die Betriebstemperatur der Sensoreinrichtung durch einen Temperaturkompensator stabilisiert. Dies ist insbesondere bei der Verwendung eines Pulsröhrenkühlers als mechanische Kühleinrichtung vorteilhaft, da die von dem Pulsröhrenkühler erzeugte Endtemperatur im Bereich um 2,5 K aufgrund der Gasimpulse leicht schwankt .

Diese Temperaturkompensation kann passiv durch eine "schlechte" thermische Kopplung zwischen Kühleinrichtung und Sensoreinrichtung realisiert sein (Anspruch 9) oder aktiv durch ein Heizelement das die Sensoreinrichtung auf eine Betriebstemperatur T_{S}>T_{minK} stabilisiert (Anspruch 10).

Gemäß einer weiteren vorteilhaften Ausgestaltung der Erfindung nach Anspruch 11 liegt der Vorverstärker auf der gleichen Temperatur wie die Sensoreinrichtung. Hierdurch werden die störungsempfindlichen Meßsignalleitungen zwischen Sensor und Vorverstärker in ihrer Länge minimiert.

Gemäß einer weiteren vorteilhaften Ausgestaltung der Erfindung nach Anspruch 12 wird als Vorverstärker ein SQUID oder ein SQUID-Array eingesetzt, da dieser als Vorverstärker in einem wiederimpedanten elektrischen Kreis angepasst ist.. Die Temperaturänderung des Thermometers wird in der Widerstandsänderung sichtbar, welche eine Stromänderung in der Einkoppelspule des SQUIDs erzeugt. Das vom SQUID erzeugte Spannungssignal ist dann Ausgangspunkt für die Energiebestimmung des einfallenden Teilchens oder Strahlung.

Gemäß einer weiteren vorteilhaften Ausgestaltung der Erfindung nach Anspruch 13 sind Vorverstärker und Sensor auf einem gemeinsamen Chip angeordnet, d. h. auf einem gemeinsamen IC sind sowohl der Sensor als auch der Vorverstärker ausgebildet. Hierdurch werden Meßfehler durch freiliegende Meßsignalleitungen zwischen Sensor und' Vorverstärker, z. B. Bonddrähte, vermieden.

### Figurenbeschreibung

Weitere Einzelheiten, Merkmale und Vorteile der Erfindung ergeben sich aus der nachfolgenden Beschreibung bevorzugter Ausführungsformen anhand der Zeichnungen.

Es zeigt:
Fig. 1 eine schematische Darstellung einer ersten Ausführungsform der Erfindung,
Fig. 2 eine schematische Darstellung einer zweiten Ausführungsform der Erfindung,
Fig. 3 eine erste Ausgestaltung von Sensor und Vorverstärker, die in verschiedenen Ausführungsformen der Erfindung eingesetzt werden können,
Fig. 4 eine zweite Ausgestaltung von Sensor und Vorverstärker, die in verschiedenen Ausführungsformen der Erfindung eingesetzt werden können,
Fig. 5 eine Realisierung des Sensorflächenvergrößerungsmittels in Form einer Röntgenlinse,
Fig. 6 eine weitere Realisierung des Sensor-flächenvergrößerungsmittels in Form einer Sensormatrix mit einer Vielzahl von Einzelsensoren,
Fig. 7 eine erste Ausgestaltungsform der Sensoreinrichtung, die in den verschiedenen Ausführungsformen der Erfindung eingesetzt werden kann, und
Fig. 8 eine zweite Ausgestaltungsform der Sensoreinrichtung, die in den verschiedenen Ausführungsformen der Erfindung eingesetzt werden kann.

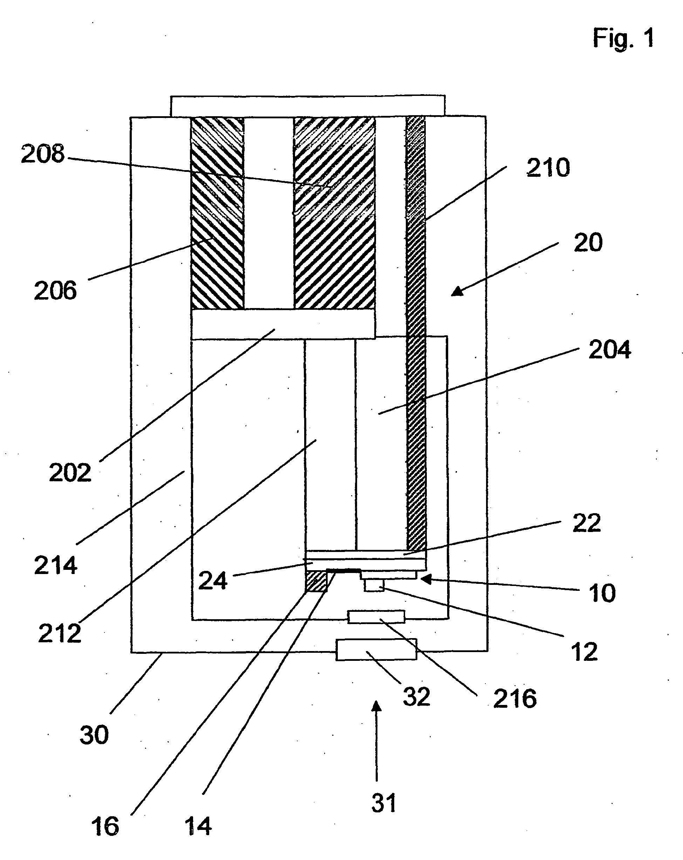

Fig. 1 zeigt ein Detektorsystem mit einer Kryo-Detektorvorrichtung gemäß der vorliegenden Erfindung, das eine Sensoreinrichtung 10 zum Erfassen von Teilchen, Strahlung oder Feldern mit wenigstens einem auf einem Tieftemperatur basierenden Sensor 12 mit einer aktiven Sensorfläche 121 umfaßt. Die Sensoreinrichtung 10 ist über Meßsignalleitungen 14 mit einem Vorverstärker 16 verbunden. Der Vorverstärker 16 und die Sensoreinrichtung 10 sind thermisch an eine mechanische Kühleinrichtung 20 gekoppelt, indem auf einer sogenannten kalten Platte 22 mit der minimalen Kühltemperatur TminK der Vorverstärker 16 und die Sensoreinrichtung 10 angeordnet sind. Die thermische Kopplung zwischen Sensoreinrichtung 10 bzw. Vorverstärker 16 ist vergleichsweise "schlecht" ausgeführt, so daß dadurch ein Temperaturkompensator 24 oder Temperaturpuffer zwischen kalter Platte 22 und Sensoreinrichtung 10 bzw. Vorverstärker 16 realisiert ist. Durch diesen Temperaturkompensator 24 werden die leichten Schwankungen der minimalen Kühltemperatur TminK im Bereich von +/-100 mK der Gasimpulse kompensiert und ausgeglichen.

Die Meßsignalleitungen 14 sind starr mit der kalten Platte 22 verbunden, um Störungen der Meßergebnisse aufgrund von mechanischen Schwingungen der Meßsignalleitungen 14 zu vermeiden. Die Kühleinrichtung 20, der Vorverstärker 16 und der Sensoreinrichtung 10 sind in einem Vakuumgefäß 30 angeordnet. Die zu messenden bzw. zu erfassenden Teilchen oder Strahlung 31 können durch ein erstes Eintrittsfenster 32 einfallen.

Die mechanische Kühleinrichtung 20 ist als zweistufiger Pulsröhrenkühler ausgeführt. Der Pulsröhrenkühler 20 umfaßt eine erste Stufe 202, die eine Kühltemperatur von ca. 70 K bereitstellt und aus einer zweiten Stufe 204, die dann die minimale Kühltemperatur TminK im Bereich zwischen 2,4 K und 4 K bereitstellt. Die erste Stufe 202 umfaßt ein erstes Pulsrohr 206 und einen ersten Regenerator 208. Die zweite Stufe 204 umfaßt ein zweites Pulsrohr 210 und einen zweiten Regenerator 212. Die zweite Kühlstufe 204 umfaßt ein 77K-Schild 214. Durch das 77K-Schild wird die kalte Platte 22 vor "warmer" Infrarotstrahlung geschützt. Die kalte Platte 22 ist daher nur "kalter" Strahlung unter 77K ausgesetzt. Das 77K-Schild weist im Bereich der Sensoreinrichtung 10 unter dem ersten Eintrittsfenster 32 ein zweites Eintrittsfenster 216 auf, durch das die zu erfassende Strahlung bzw. die zu erfassenden Teilchen 31 zur Sensoreinrichtung 10 gelangen. Hinsichtlich des Aufbaus und der Funktion eines Pulsröhrenkühlers wird auf Info-Phys-Tech Nr. 6, 1996, aus VDI Technologiezentrum, Physikalische Technologien verwiesen.

Da bei der vorliegenden Erfindung das Bauvolumen des Sensors 12, d. h. die Größe der aktive Sensorfläche 121 klein genug gewählt wird, um einen Betriebstemperatur-bereich TBB zwischen 2,6 und 2,9 K zu ermöglichen, reicht die aktive Sensorfläche 122 nicht mehr aus um vernünftige Meßergebnisse zu erzielen. Es wird daher ein Sensorflächenvergrößerungsmittel 122 vorgesehen, um eine ausreichend große effektive Sensorfläche 123 zur Verfügung zu stellen. Dieses Sensorflächenvergrößerungsmittel kann beispielsweise durch eine Röntgenlinse - bei der Detektion von Röntgenstrahlung - oder durch eine Sensormatrix mit einer Vielzahl von Einzelsensoren realisiert sein.

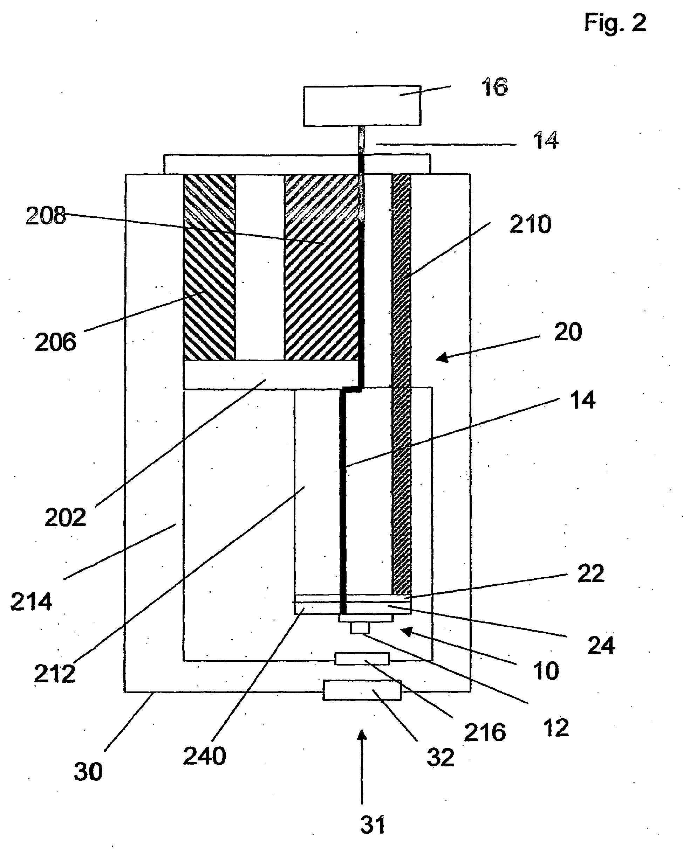

Fig. 2 zeigt eine zweite Ausführungsform der Erfindung, die sich von der ersten Ausführungsform nach Fig. 1 zu einen dadurch unterscheidet, daß der Vorverstärker 16 nicht innerhalb des Vakuumgefäßes 30 sondern außerhalb davon angeordnet ist. Hierbei ist es wichtig, daß die Meßsignalleitungen 14 mechanisch starr mit der Kühleinrichtung 20 gekoppelt sind, um mechanische Schwingungen dieser Meßsignalleitungen 14 und dadurch bedingte Störungen des Meßsignals zu vermeiden. Darüber hinaus ist der Temperaturkompensator 24 zwischen kalter Platte 22 und Sensoreinrichtung 10 bzw. Vorverstärker 16 als aktive Heizeinrichtung 240 ausgebildet. Durch die Heizeinrichtung 240 wird die minlmale Kühltemperatur TminK durch Heizung leicht erhöht und dadurch auf eine bestimmte Temperatur im Betriebstemperaturbereich TBB stabilisiert.

Bei der ersten Ausführungsform nach Fig. 1 kann an Stelle der passive Temperaturkompensation durch "schlechte" thermische Kopplung auch die aktive Temperaturkompensation durch die Heizeinrichtung 240 realisiert werden. Umgekehrt kann bei der zweiten Ausführungsform nach Fig. 2 an Stelle der aktiven Temperaturkompensation die passive Temperaturkompensation angewandt werden.

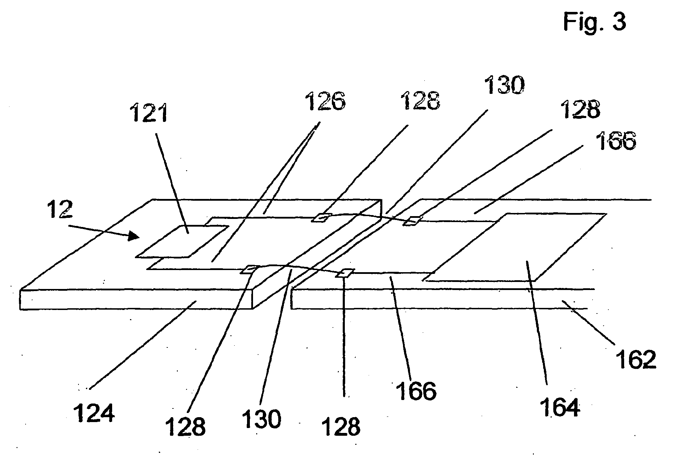

Fig. 3 zeigt eine erste beispielhafte Ausgestaltung von Sensoreinrichtung 10 und Vorverstärker 16. Der Sensor 12 mit einer aktiven Sensorfläche 121 ist auf einem Sensor-Halbleitersubstrat 124 angeordnet. Von dem Sensor 12 führen die Meßsignalanschlußleitungen 126 zu Bondpads 128. Der Vorverstärker 16 ist ebenfalls als IC mit einem Vorverstärker-Halbleitersubstrat 162 ausgebildet. Auf dem Vorverstärker-Halbleitersubstrat 162 sind elektronische Schaltungen 164 des Vorverstärkers 16 ausgebildet. Auf dem Vorverstärker-Halbleitersubstrat 162 führen Meßsignalzuführleitungen 166 zu Bondpads 128. Die beiden Halbleitersubstrate 124 und 162 sind in unmittelbarer Nähe zueinander angeordnet, so daß der Abstand der Bondpads 126 auf den jeweiligen Halbleitersubstraten 124, 162 möglichst klein ist. Diese Bondpads 126 werden dann über Bonddrähte 130 miteinander elektrisch verbunden.

Damit werden die Meßsignalleitungen 14 durch die Meßsignalanschlußleitungen 126, die Bonddrähte 130 und die Meßsignalzuführleitungen 162 gebildet. Durch diese Ausgestaltung werden frei liegende und damit schwingfähige Meßsignalleitungen 14, hier in Form der Bonddrähte 130, auf eine minimale Länge reduziert.

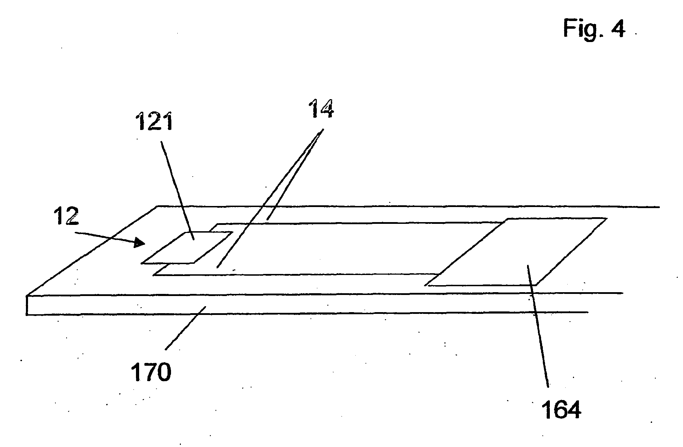

Gemäß einer weiteren Ausgestaltung von Vorverstärker 16 und Sensoreinrichtung 10 nach Fig. 4 können diese kurzen Bonddrähte 130 auch noch vermieden werden, in dem sowohl der Sensor 12 als auch der Vorverstärker 16 auf einem gemeinsamen Halbleitersubstrat 170 angeordnet sind. Dadurch können die Meßsignalleitungen 16 als Leitungen eines ICs direkt ausgeführt werden.

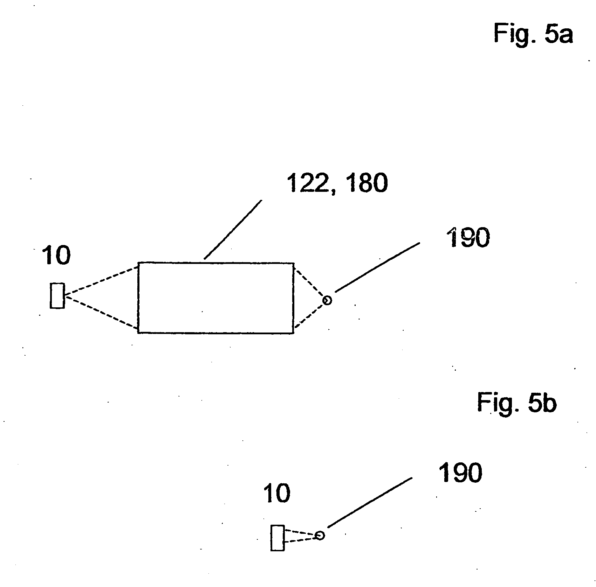

Da bei der vorliegenden Erfindung die aktive Sensorfläche 121 und damit das Bauvolumen des Sensors 12 klein genug gewählt wird, um einen Betriebstemperaturbereich T_{B} zwischen 2,4 und 4,2 K, bevorzugsweise zwischen 2,5 und 3,5 K und insbesondere zwischen 2,6 und 2,9 K zu ermöglichen, muß ein Sensorflächenvergrößerungsmittel 122 eingesetzt werden. Bei der Detektion von Röntgenstrahlung wird vorzugsweise eine Röntgenlinse 180 eingesetzt, wie dies schematisch in Fig. 5a dargestellt ist. Die Röntgenstrahlung von einer Strahlungsquelle 190 wird durch die Röntgenlinse 180 auf den Sensor 12 fokussiert. Der Raumwinkel der Röntgenlinse 180 ist dabei größer als die aktive Sensorfläche 121. In Fig. 5b zeigt zum Vergleich den kleineren Raumwinkel bei einer Anordnung ohne Röntgenlinse. Typischerweise werden mit Röntgenlinsen Verstärkungsfaktoren zwischen 10 und 100 erreicht.

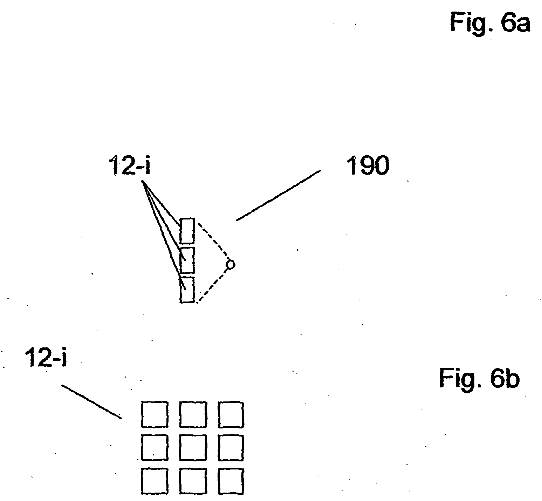

Alternativ läßt sich das Sensorflächenvergrößerungsmittel 122 auch als Sensormatrix 182 mit einer vielzahl von Einzelsensoren 12-i realisieren, wie dies in Fig. 6a und 6b schematisch dargestellt ist. Hierbei sind die Einzelsensoren in Matrixform in Zeilen und Spalten angeordnet. Durch diese Anordnung addieren sich die einzelnen aktiven Sensorflächen zu einer gesamten effektiven Sensorfläche. Wie aus Fig. 6a zu ersehen ist, führt dies auch zu einer Vergrößerung des Raumwinkels aus dem einfallende Strahlung 31 erfaßt wird.

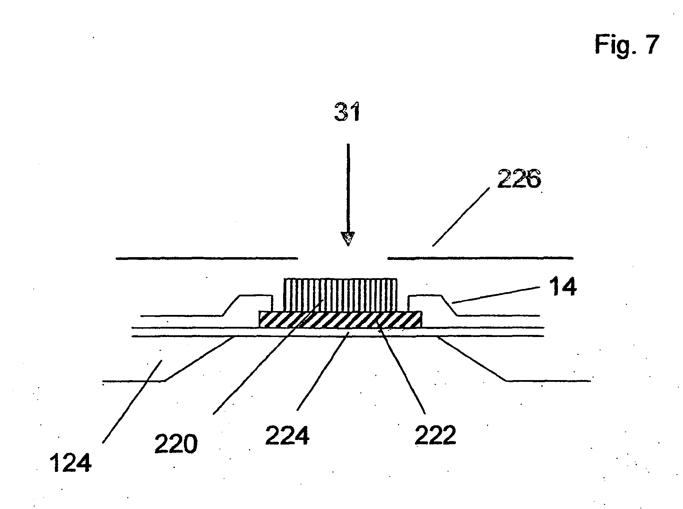

Fig. 7 zeigt den typischen Aufbau der Sensoreinrichtung 10 mit einem Absorber 220, der auf dem eigentlichen auf einem Tieftemperatureffekt basierenden Sensor, beispielsweise in Form eines Phasenübergangsthermometers 222, angeordnet ist. Absorber 220 und Phasenübergangsthermometer 222 sind auf einer Membran 224 angeordnet, die wiederum thermisch mit dem Sensor-Halbleitersubstrat 124 gekoppelt ist. Über dem Absorber 220 ist eine Blende 226 angeordnet, die die einfallende Strahlung bzw. einfallende Teilchen 31 auf den Absorber 220 kollimiert. Die Blende 226, vorzugsweise aus Platin, definiert damit die aktive Sensorfläche 121. Das Phasenübergangsthermometer 222 wird über die Meßsignalleitungen 14 elektrisch kontaktiert.

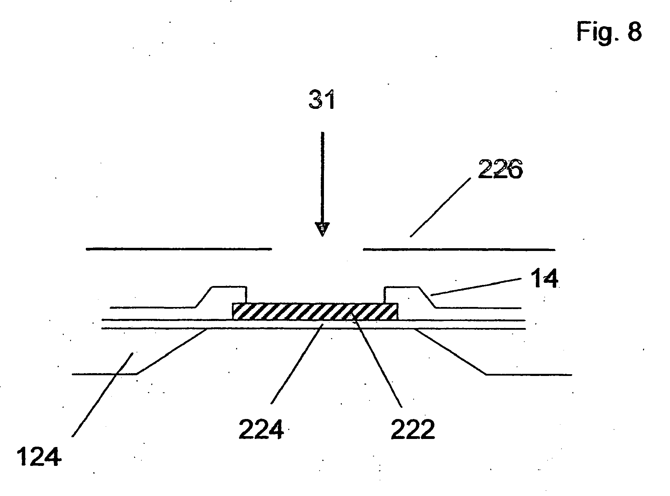

Fig. 8 zeigt eine alternative Ausgestaltung der Sensoreinrichtung 10, die sich von der Ausgestaltung nach Fig. 7 lediglich durch den Verzicht auf einen Absorber unterscheidet. Die einfallende Strahlung bzw. die einfallenden Teilchen 31 werden direkt im Phasenübergangsthermometer 222 absorbiert und thermalisiert.

### Bezugszeichenliste

- 10: Sensoreinrichtung
- 12, 12-i: Sensor
- 14: Meßsignalleitung
- 16: Vorverstärker
- 20: Pulsröhrenkühler
- 22: kalte Platte
- 24: Temperaturkompensator
- 240: Heizeinrichtung
- 30: Vakuumgefäß
- 31: einfallende.Strahlung bzw. einfallende Teilchen
- 32: erstes Eintrittsfenster

- 121: aktive Sensorfläche
- 122: Sensorflächenvergrößerungsmittel
- 124: Sensor-Halbleitersubstrat
- 126: Meßsignalanschlußleitung
- 128: Bondpads
- 130: Bonddraht
- 162: Vorverstärker-Halbleitersubstrat
- 164: elektrische Schaltung
- 166: Meßsignalzuführleitungen
- 170: gemeinsamses Halbleitersubstrat
- 180: Röntgenlinse
- 182: Sensormatrix

- 202: erste Kühlstufe
- 204: zweite Kühlstufe
- 206: erstes Pulsrohr
- 208: erster Regenerator
- 210: zweites Pulsrohr
- 212: zweiter Regenerator
- 214: 77K-Schild
- 216: zweites Eintrittsfenster
- 220: Absorber
- 222: Phasenübergangsthermometer
- 224: Membran
- 226: Blende

## Patentansprüche

1. Kryo-Detektorvorrichtung, mit
einer Sensoreinrichtung (10) zum Erfassen von Teilchen, Strahlung oder Feldern mit wenigstens einem auf einem Tieftemperatureffekt basierenden Sensor (12) und zur Ausgabe von Meßsignalen, wobei der Sensor (12) eine aktive Sensorfläche (121) aufweist,
einer mechanischen Kühleinrichtung (20), die thermisch an die Sensoreinrichtung (10) gekoppelt ist, um eine minimale Kühltemperatur Tₘᵢₙₓ zu erzeugen,
einem mit der Sensorreinrichtung (10) verbundenen Vorverstärker (16) zum Verstärken der durch die Sensoreinrichtung (10) erzeugten Meßsignale, und
einem Sensorflächenvergrößerungsmittel (122) zur Erzeugung einer effektiven Sensorfläche (123) der Sensoreinrichtung (10), die größer ist als die aktive Sensorfläche (121) des einzelnen Sensors (12),
wobei der Betriebstemperaturbereich (TBₛ) zwischen 2,4 K und 4,2 K, vorzugsweise zwischen 2,5 K und 3,5 K und insbesondere vorzugsweise zwischen 2,6 K und 2,9 K beträgt und
wobei die aktive Sensorfläche (121) kleiner als 50000 µm² ist und damit das Bauvolumen des Sensors (12) klein genug wird, um den genannten Betriebstemperaturbereich (TBₛ) zu ermöglichen.

2. Kryo-Detektorvorrichtung nach Anspruch 1, **dadurch gekennzeichnet, daß** nur eine ein- oder mehrstufige mechanische Kühleinrichtung (20) vorgesehen ist.

3. Kryo-Detektorvorrichtung nach einem der vorhergehenden Ansprüche, **dadurch gekennzeichnet, daß** das Sensorflächenvergrößerungsmittel (122) eine Röntgenlinse (180) umfaßt.

4. Kryo-Detektorvorrichtung nach einem der vorhergehenden Ansprüche, **dadurch gekennzeichnet, daß** das Sensorflächenvergrößerungsmittel (122) durch eine Sensormatrix aus einer Mehrzahl von Einzelsensoren (12-i) realisiert ist.

5. Kryo-Detektorvorrichtung nach einem der vorhergehenden Ansprüche, **dadurch gekennzeichnet, daß** die Kühleinrichtung (20) einen ein- oder mehrstufigen Pulsröhrenkühler umfaßt.

6. Kryo-Detektorvorrichtung nach einem der vorhergehenden Ansprüche, **dadurch gekennzeichnet, daß** die Kühleinrichtung (20) einen ein- oder mehrstufigen Gifford-McMahon-Kühler umfaßt.

7. Kryo-Detektorvorrichtung nach einem der vorhergehenden Ansprüche, **dadurch gekennzeichnet, daß** der Sensor (12) bzw. die Sensoren (12-i) der Sensoreinrichtung (10) supraleitende Tunneldioden, magnetische Kalorimeter, Widerstandsthermometer und/oder insbesondere Phasenübergangsthermometer sind.

8. Kryo-Detektorvorrichtung nach einem der vorhergehenden Ansprüche, **dadurch gekennzeichnet, daß** die. Temperatur der Sensoreinrichtung (10) durch einen Temperaturkompensator (24) stabilisiert ist.

9. Kryo-Detektorvorrichtung nach Anspruch 8, **dadurch gekennzeichnet, daß** der Temperaturkompensator (20) durch eine schlechte thermische Kopplung zwischen Kühleinrichtung (20) und Sensoreinrichtung (10) realisiert ist.

10. Kryo-Detektorvorrichtung nach Anspruch 8 oder 9, **dadurch gekennzeichnet, daß** Temperaturkompensator (20) ein Heizelement (240) umfaßt, das die Sensoreinrichtung (10) auf die Betriebstemperatur Ts > T_{minK} stabilisiert.

11. Kryo-Detektorvorrichtung nach einem der vorhergehenden Ansprüche, **dadurch gekennzeichnet, daß** der Vorverstärker (16) auf der gleichen Temperatur wie die Sensoreinrichtung (10) liegt.

12. Kryo-Detektorvorrichtung nach Anspruch 11, **dadurch gekennzeichnet, daß** der Vorverstärker (16) ein SQUID oder ein SQUTD-Array ist.

13. Kryo-Detektorvorrichtung nach einem der vorhergehenden Ansprüche, **dadurch gekennzeichnet, daß** der Vorverstärker (16) und der Sensor (12) auf einem gemeinsamen Chip (170) angeordnet sind.

## Claims

1. A cryogenic detector device, comprising:
sensor means (10) for detecting particles, radiation or fields, including at least one sensor (12) based on a low-temperature effect that outputs measurement signals, said sensor (12) including an active sensor area (121);
a mechanical cooler (20) that is thermally coupled to the sensor means (10) so as to produce a minimum cooling temperature T_{minK};
a pre-amplifier (16) connected to the sensor means (10), for amplifying the measurement signals generated by the sensor means (10); and
sensor area enlargement means (122) for producing an effective sensor area (123) that is larger than the active sensor area (121) of the individual sensor (12), wherein the operating temperature range (TB_{S}) is between 2.4 and 4.2 K, preferably between 2.5 and 3.5 K, and in a particularly preferred manner between 2.6 and 2.9 K, and
wherein the active sensor area (121) is less than 50,000 µm², whereby the structural volume of the sensor (12) becomes sufficiently small to make the named operating temperature range (TB_{S}) possible.

2. The cryogenic detector device of claim 1, **characterized in that** only one mechanical cooler (20) having one stage or several stages is provided.

3. The cryogenic detector device of any one of the preceding claims, **characterized in that** the sensor area enlargement means (122) includes an X-ray lens (180).

4. The cryogenic detector device of any one of the preceding claims, **characterized in that** the sensor area enlargement means (122) is realized of a sensor matrix of a plurality of individual sensors (12-i).

5. The cryogenic detector device of any one of the preceding claims, **characterized in that** the cooler (20) includes a pulse-tube cooler having one stage or several stages.

6. The cryogenic detector device of any one of the preceding claims, **characterized in that** the cooler (20) includes a Gifford-McMahon cooler having one stage or several stages.

7. The cryogenic detector device of any one of the preceding claims, **characterized in that** the sensor (12) or the sensors (12-i) of the sensor means (10) are superconducting tunnel diodes, magnetic calorimeters, resistance thermometers, and/or in particular a phase transition thermometers.

8. The cryogenic detector device of any one of the preceding claims, **characterized in that** the temperature of the sensor means (10) is stabilized by a temperature compensator (24).

9. The cryogenic detector device of claim 8, **characterized in that** the temperature compensator (20) is realized through limited thermal coupling between cooler (20) and sensor means (10).

10. The cryogenic detector device of claim 8 or 9, **characterized in that** the temperature compensator (20) includes a heater element (240) that stabilizes the sensor means (10) to the operating temperature Ts > T_{minK}.

11. The cryogenic detector device of any one of the preceding claims, **characterized in that** the pre-amplifier (16) is at the same temperature as the sensor means (10).

12. The cryogenic detector device of claim 11, **characterized in that** the pre-amplifier (16) is a SQUID or a SQUID array.

13. The cryogenic detector device of any one of the preceding claims, **characterized in that** the pre-amplifier (16) and the sensor (12) are disposed on a common chip (170).

## Revendications

1. Dispositif de détection cryogénique comprenant
un dispositif de capteur (10) pour détecter les particules, le rayonnement ou les champs à l'aide d'au moins un capteur (12) se basant sur un effet cryogénique et pour émettre les signaux de mesure, le capteur (12) présentant une surface de capteur (121) active,
un dispositif de refroidissement (20) mécanique qui est couplé thermiquement au dispositif de capteur (10) afin de générer une température de refroidissement T_{minK} minimale,
un préamplificateur (16) relié au dispositif de capteur (10) pour amplifier les signaux de mesure générés par le dispositif de capteur (10), et
un moyen d'agrandissement de surface de capteur (122) pour générer une surface de capteur (123) effective du dispositif de capteur (10) qui est supérieure à la surface de capteur (121) active du capteur individuel (12),
la plage de température de service (TB₁) étant comprise entre 2,4 K et 4,2 K, de préférence entre 2,5 K et 3,5 K et en particulier de préférence entre 2,6 K et 2,9 K et
la surface de capteur (121) active étant inférieure à 50 000 µm² et ainsi le volume du capteur (12) étant suffisamment petit afin de permettre la plage de température de service citée (TB₁).

2. Dispositif de détection cryogénique selon la revendication 1, **caractérisé en ce que** seul un dispositif de refroidissement (20) mécanique à un ou à plusieurs étages est prévu.

3. Dispositif de détection cryogénique selon l'une quelconque des revendications précédentes, **caractérisé en ce que** le moyen d'agrandissement de surface de capteur (122) comprend une lentille à rayons X (180).

4. Dispositif de détection cryogénique selon l'une quelconque des revendications précédentes, **caractérisé en ce que** le moyen d'agrandissement de surface de contact (122) est réalisé par une matrice de capteur composée d'une pluralité de capteurs individuels (12-i).

5. Dispositif de détection cryogénique selon l'une quelconque des revendications précédentes, **caractérisé en ce que** le dispositif de refroidissement (20) comprend un refroidisseur tubulaire à impulsion à un ou à plusieurs étages.

6. Dispositif de détection cryogénique selon l'une quelconque des revendications précédentes, **caractérisé en ce que** le dispositif de refroidissement (20) comprend un refroidisseur de Gifford-McMahon à un ou à plusieurs étages.

7. Dispositif de détection cryogénique selon l'une quelconque des revendications précédentes, **caractérisé en ce que** le capteur (12) et/ou les capteurs (12-i) du dispositif de capteur (10) sont des diodes tunnel supraconductives, des calorimètres magnétiques, des thermomètres à résistance électrique et/ou en particulier des thermomètres à point de transition de phase.

8. Dispositif de détection cryogénique selon l'une quelconque des revendications précédentes, **caractérisé en ce que** la température du dispositif de capteur (10) est stabilisée par un compensateur thermique (24).

9. Dispositif de détection cryogénique selon la revendication 8, **caractérisé en ce que** le compensateur thermique (20) est réalisé par un mauvais couplage thermique entre le dispositif de refroidissement (20) et le dispositif de capteur (10).

10. Dispositif de détection cryogénique selon la revendication 8 ou 9, **caractérisé en ce que** le compensateur thermique (20) comprend un élément chauffant (240) qui stabilise le dispositif de capteur (10) à la température de service T_{S} > T_{minK}.

11. Dispositif de détection cryogénique selon l'une quelconque des revendications précédentes, **caractérisé en ce que** le préamplificateur (16) se trouve à la même température que le dispositif de capteur (10).

12. Dispositif de détection cryogénique selon la revendication 11, **caractérisé en ce que** le préamplificateur (16) est un SQUID ou un ensemble de SQUID.

13. Dispositif de détection cryogénique selon l'une quelconque des revendications précédentes, **caractérisé en ce que** le préamplificateur (16) et le capteur (12) sont disposés sur une puce (170) commune.
